# EUROPEAN PATENT SPECIFICATION

(11) **EP 1 577 145 B1**
(45) Date of publication and mention of the grant of the patent: **06.08.2008**
(21) Application number: 04251510.6
(22) Date of filing: 17.03.2004
(51) Int. Cl.: B60K 15/077, B60K 15/06

(54) **Reservoir and Filter assembly**
Behälter- und Filteranordnung
Ensemble de filtre et réservoir

(43) Date of publication of application: 21.09.2005
(73) Proprietor: Delphi Technologies, Inc., Troy, MI 48007-5052 (US)
(72) Inventor: Tesser, Silvio, L-1131 (LU); Caillard, Jean-Pierre, F-55150 Mangiennes (FR); Dumouchel, Franck, F-57390 (FR)
(74) Representative: Robert, Vincent

(56) References cited:
- EP-A- 0 922 603
- US-A1- 2001 050 107
- US-A1- 2002 074 270

## Description

The present invention relates generally to fuel tanks for vehicles. In particular, but not exclusively, the invention relates to reservoir and filter assemblies for fuel tanks of vehicles.

It is known to provide a reservoir in the fuel tank of a vehicle. The reservoir holds a quantity of fuel so that it is available when the engine is started. A pump is typically provided within the reservoir to pump fuel from the reservoir to the engine. A cover is provided at the fuel tank which allows access for fuel lines, electrical cables and the like.

It is also known to provide a fuel filter for filtering the fuel which is conveyed from the reservoir to the engine. The filter may be provided within or external to the fuel tank. There are a number of advantages associated with providing the filter within the fuel tank. For instance, current fuel systems often require a bypass from the filter back to the fuel tank in order to keep the pressure regulated. Therefore, return fuel lines are required when the filter is external to the fuel tank. Internal fuel filters eliminate the need for a return line and the associated connection at the cover and allow compliance with Government emission regulations. US 6,553,973 describes a filter assembly which is integrated with the fuel tank cover.

In many fuel tank designs, the vertical space available for the reservoir and filter is limited such that these components cannot be provided in line. Therefore, since the tank opening for the cover is of a limited width, both components cannot be installed by inserting through the tank opening. Because of this, the reservoir typically has to be located within the tank prior to welding of the two tank shells to form the complete fuel tank.

Furthermore, there is a need for additional fasteners to maintain the reservoir in the desired position. Multiple assembly operations are therefore required.

It is advantageous to provide a reservoir and filter assembly which may be installed by inserting through the tank opening. It is advantageous to physically connect the reservoir and filter for maintaining the position of these components, while providing means to allow the assembly to fit within fuel tanks having a limited vertical space. United States Patent Publication No. US 2002/0074270 describes a combined fuel pump and filter where the filter is located below and to the side of the filter such that the arrangement can be lowered into the fuel tank in a downward and sideways movement. This arrangement can be difficult to install. According to a first aspect of the present invention there is provided a reservoir and filter assembly for the fuel tank of a vehicle comprising:
a reservoir for holding fuel;
a filter for filtering fuel to be conveyed from the fuel tank to the engine of the vehicle; and
connection means for connecting the reservoir and filter,
characterised in that the connection means is adapted to provide mechanical connection of the reservoir and filter while allowing movement of the filter relative to the reservoir between a first position for insertion of the reservoir and filter assembly within the fuel tank where when in said first position the reservoir and filter are aligned end to end and in line with one another along the longitudinal axis of said assembly and a second position for operation of the reservoir and filter assembly where when in said second position the reservoir and filter are aligned side by side along a lateral axis of said assembly and said connection means is adapted to cause rotation of the filter relative to the reservoir when the filter is moving from the first position to the second position.

Preferably the reservoir and filter are aligned when the filter is in the first position such the reservoir and filter are insertable, while mechanically connected, through an opening of the tank Preferably the connection means comprises a hinge.

Preferably the connection means is adapted to allow translation of the filter relative to the reservoir when the filter is moving from the first position to the second position.

Preferably translation is provided by a pin provided at one of the filter and reservoir which is slideable within a slot provided at the other of the filter and reservoir. Preferably the pin is provided at the reservoir and the slot is provided at a guide bar fastened to the filter. Preferably the slot is helical for causing both translation and rotation of the filter relative to the reservoir.

According to a second aspect of the present invention, there is provided a method of installing a reservoir and filter assembly within the fuel tank of a vehicle, the method comprising:
mechanically connecting, using connection means, the reservoir and filter, in a first position where the reservoir and filter are aligned end to end along the longitudinal axis of said assembly inserting the reservoir and filter assembly into the fuel tank of a vehicle,
moving the filter relative to the reservoir from the first position to a second operational position where the reservoir and filter are aligned side by side along a lateral axis of said assembly and where said movement of the filter from the first to the second position results from the connection means and insertion of said reservoir and filter assembly into the fuel tank of the vehicle.

Preferably the filter is moved between the first position and the second position when the reservoir and filter assembly contacts the base of the fuel tank.

Embodiments of the present invention will now be described, by way of example only, with reference to the accompanying drawings, in which:
Fig. 1 is a sectional side view of a fuel tank according to the prior art;
Fig. 2 is a perspective view of a reservoir and filter according to the prior art;
Fig. 3 is a perspective view of a reservoir and filter assembly according to a first embodiment of the present invention with the filter in a first position;
Fig. 4 is a perspective view of the reservoir and filter assembly of figure 3 with the filter in the second position;
Fig. 5 is a detailed perspective view of the connection means of Figures 3 and 4;
Fig. 6 is a perspective view of a reservoir and filter assembly in accordance with a second embodiment of the present invention with the filter in the first position;
Fig. 7 is a perspective view of the reservoir and filter assembly of Fig. 6 with the filter in the second position; and
Fig. 8 is a detailed view of the connection means of Figs. 6 and 7.

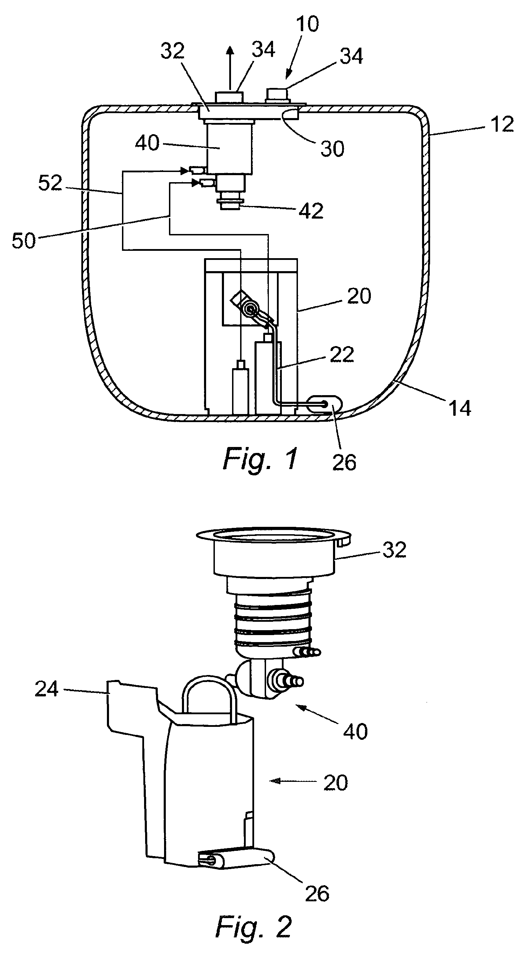

Fig. 1 shows a fuel tank 10 according to the prior art. The tank 10 is formed from an upper shell 12 and a lower shell 14 which are welded together. Situated within the tank 10, and fixed to the base of the tank 10, is a reservoir 20 for holding fuel. Within the reservoir 20 there is provided a pump 22. The reservoir 20 also includes a float gauge 26 which is connected to the fuel level indicator (not shown).

Fuel enters the tank 10 via a fill opening (not shown). The tank 10 also includes a tank opening 30 in which is provided a cover 32. The cover includes connections 34 for the connecting of components within the tank 10 to components external to the tank 10 via hydraulic or electrical lines.

For the fuel tank 10 of Fig 1, a fuel filter 40 is provided at the cover 32. However, in other prior art fuel systems, the filter 40 may be provided at any other location within, or external to, the tank 10.

A first fuel line 50 fluidly connects the pump 22 to the filter 40. A further fuel line (not shown) fluidly connects the filter 40 to the engine (not shown). Therefore, filtered fuel is pumped from the reservoir 20 to the engine.

The filter 40 includes a pressure regulator 42. When the fuel being pumped to the engine exceeds the demand of the engine, a predetermined maximum pressure will be reached and the pressure regulator 42 will cause fuel to return to the reservoir 20 or feed one jet pump.

In the prior art fuel tank 10 of Fig. 1, the pump 22 and filter 40 are fluidly connected. However, there is no mechanical or rigid connection means between the reservoir 20 and filter 40. Because of this, additional fixing means are required for locating the reservoir 20 in the tank 10. This entails that the reservoir 20 must be situated within the tank 10 prior to welding of the two shells 12, 14. Additional assembly operations are therefore required.

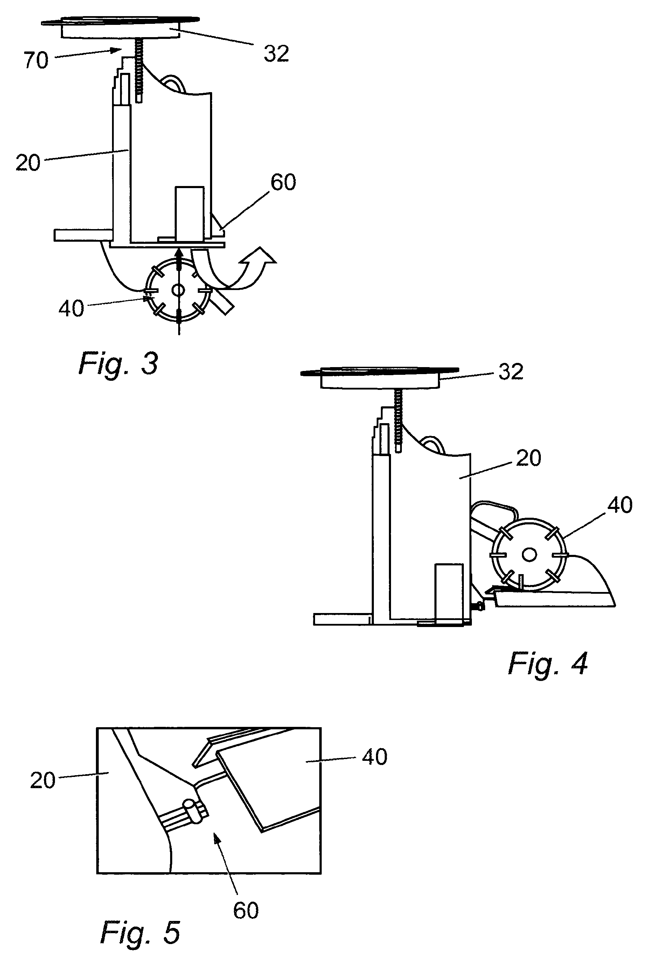

Figs 3 to 5 show a first embodiment of the present invention. Similar features are given similar reference numerals.

The reservoir 20 and filter 40 are mechanically connected to each other via connection means 60 which, in Figs 3 to 5, is in the form of a hinge. The connection means 60 is shown in more detail in Fig 5. The reservoir 20 is mechanically connected to the cover 32 by two guide rods 70.

Fig 3 shows the filter 40 in a first position. In this position, reservoir 20 and filter 40 are aligned axially or end to end, and this allows insertion of the reservoir and filter assembly into the fuel tank 10 via the tank opening 30. A spring (not shown) may be provided at the hinge to maintain the filter 40 in the first position.

The reservoir and filter assembly is inserted into the fuel tank 10 until the filter 40 makes contact with the base of the tank 10. If a downwards force is maintained on the assembly, the filter 40 will pivot about the hinge until the filter 40 is in the second position as shown in Fig 4. In this position, the reservoir 20 and filter 40 are aligned laterally or side by side and take up less vertical space. The assembly may be operated in this position.

The combination of the mechanical connection of the reservoir 20 and filter 40 and the guide rods 70 and alignment of the cover 32 to the tank opening 30 ensure that each of the components are in the correct position for operation.

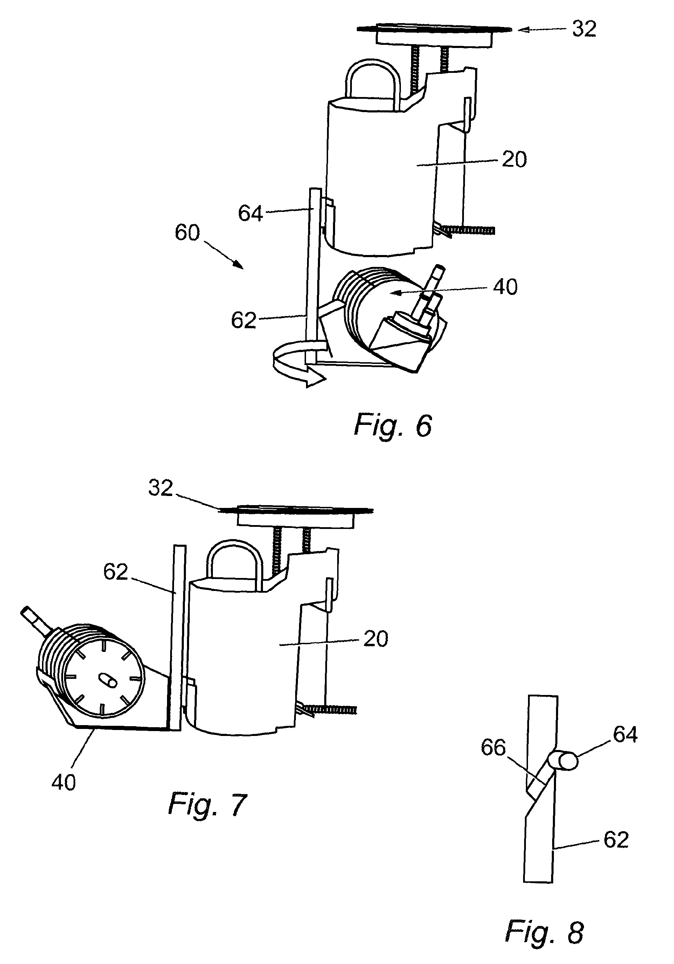

Figs 6 to 8 show a second embodiment of the present invention. Similar features are given similar numerals.

Once again, connection means 60 is provided for mechanical connection of the reservoir 20 and filter 40. The filter 40 has a first position, as shown in Fig 6, in which the reservoir 20 and filter 40 are vertically aligned. The connection means 60 in this embodiment comprises a guide bar 62 which is fastened to the filter 40 and which engages with a pin 64 provided at the reservoir 20. Specifically, the pin 64 is slidable within a slot 66 provided at the guide bar 62. The slot 66 is helical.

As before, the reservoir and filter assembly are inserted in the tank 10 until the filter 40 makes contact with the base of the tank 10. Further insertion causes upward movement of the filter 40 and guide bar 62 as the pin 64 slides relative to the slot 66. Due to the helical shape of the slot 66, the filter 40 and guide bar 62 are also caused to rotate by 180 degrees until the filter 40 is in the second position which is shown in Fig. 7. In this position, the filter 40 and reservoir 20 are laterally aligned.

Various modifications and improvements can be made without departing from the scope of the present invention.

## Claims

1. A reservoir and filter assembly for the fuel tank (10) of a vehicle comprising:
a reservoir (20) for holding fuel;
a filter (40) for filtering fuel to be conveyed from the fuel tank (10) to the engine of the vehicle; and
connection means (60) for connecting the reservoir (20) and filter (40),
**characterised in that** the connection means (60) is adapted to provide mechanical connection of the reservoir (20) and filter (40) while allowing movement of the filter (40) relative to the reservoir (20) between a first position for insertion of the reservoir and filter assembly within the fuel tank (10) wherein when in said first position the reservoir (20) and filter (40) are aligned end to end and in line with one another along the longitudinal axis of said assembly and a second position for operation of the reservoir and filter assembly wherein when in said second postion the reservoir (20) and filter (40) are aligned side by side along a lateral axis of said assembly and said connection means is adapted to cause rotation of the filter (40) relative to the reservoir (20) when the filter (40) is moving from the first position to the second position.

2. A reservoir and filter assembly as claimed in Claim 1, wherein the reservoir (20) and filter (40) are aligned when the filter (40) is in the first position such the reservoir (20) and filter (40) are insertable, while mechanically connected, through an opening of the tank (10).

3. A reservoir and filter assembly as claimed in Claim 1, wherein the connection means (60) comprises a hinge.

4. A reservoir and filter assembly as claimed in any preceding claim, wherein the connection means (60) is adapted to allow translation of the filter (40) relative to the reservoir (20) when the filter (40) is moving from the first position to the second position.

5. A reservoir and filter assembly as claimed in Claim 4, wherein the connection means (60) comprises a pin (64) provided at one of the filter (40) and reservoir (20) which is slideable within a slot (66) provided at the other of the filter (40) and reservoir (20).

6. A reservoir and filter assembly as claimed in Claim 5, wherein the pin (64) is provided at the reservoir (20) and the slot (66) is provided at a guide bar (62) fastened to the filter (40).

7. A reservoir and filter assembly as claimed in Claim 5 or 6, wherein the slot (66) is helical for causing both translation and rotation of the filter (40) relative to the reservoir (20).

8. A reservoir and filter assembly according to any proceeding claim comprising a fuel tank (10)

9. A method of installing a reservoir and filter assembly within the fuel tank (10) of a vehicle, the method comprising:
mechanically connecting, using connection means (60), the reservoir (20) and filter (40) in a first position where the reservoir (20) and filter (40) are aligned end to end along the longitudinal axis of said assembly,
inserting the reservoir and filter assembly into the fuel tank (10) of a vehicle, moving the filter (40) relative to the reservoir (20) from the first position to a second operational position where the reservoir (20) and filter (40) are aligned side by side along a lateral axis of said assembly and
where said movement of the filter (40) from the first to the second position results from an adaptation of the connection means (60) and the insertion of said reservoir and filter assembly into the fuel tank (10) of the vehicle causing the filter to rotate.

10. A method as claimed in Claim 9, wherein the filter (40) is moved between the first position and the second position when the reservoir and filter assembly contacts the base of the fuel tank (10).

## Patentansprüche

1. Behälter- und Filteranordnung für den Kraftstofftank (10) eines Fahrzeugs, umfassend:
Einen Behälter (20) zur Aufnahme von Kraftstoff;
einen Filter (40) zum Filtern des Kraftstoffs, der vom Kraftstofftank (10) zum Motor des Fahrzeugs befördert wird; und
Verbindungsmittel (60) zur Verbindung des Behälters (20) und des Filters(40),
**dadurch gekennzeichnet, dass** das Verbindungsmittel (60) angepasst ist, eine mechanische Verbindung des Behälters (20) und des Filters (40) bereitzustellen, während Bewegung des Filters (40) relativ zum Behälter (20) zwischen einer ersten Position zum Einschieben der Behälter- und Filteranordnung innerhalb des Kraftstofftanks (10), wobei, wenn in der ersten Position, der Behälter (20) und der Filter (40) Ende an Ende und fluchtend miteinander entlang der Längsachse der besagten Anordnung und einer zweiten Position zum Betrieb der Behälter- und Filterbaugruppe ausgerichtet sind, wobei, wenn in besagter zweiten Position, der Behälter (20) und der Filter (40) nebeneinander entlang einer Querachse der besagen Anordnung ausgerichtet sind und besagtes Verbindungsmittel angepasst ist, Rotation des Filters (40) relativ zum Behälter (20) zu bewirken, wenn sich der Filter (40) von der ersten Position in die zweite Position bewegt.

2. Behälter- und Filteranordnung nach Anspruch 1, wobei der Behälter (20) und der Filter (40) fluchten, wenn sich der Filter (40) in der ersten Position befindet, sodass der Behälter (20) und der Filter (40), während sie mechanisch verbunden sind, durch eine Öffnung des Tanks (10) eingeschoben werden können.

3. Behälter- und Filteranordnung nach Anspruch 1, wobei das Verbindungsmittel (60) ein Scharnier umfasst.

4. Behälter- und Filteranordnung nach einem vorhergehenden Anspruch, wobei das Verbindungsmittel (60) angepasst ist, Translation des Filters (40) relativ zum Behälter (20) zuzulassen, wenn sich der Filter (40) von der ersten Position in die zweite Position bewegt.

5. Behälter- und Filteranordnung nach Anspruch 4, wobei das Verbindungsmittel (60) einen Stift (64) umfasst, der an einem Filter (40) und Behälter (20) bereitgestellt ist, der in einem Schlitz (66) verschiebbar ist, der am anderen Filter (40) und Behälters (20) bereitgestellt ist.

6. Behälter- und Filteranordnung nach Anspruch 5, wobei der Stift (64) am Behälter (20) bereitgestellt ist und der Schlitz (66) an einer am Filter (40) befestigten Führungsstange (62) bereitgestellt ist.

7. Behälter- und Filteranordnung nach Anspruch 5 oder 6, wobei der Schlitz (66) schraubenförmig ist, um sowohl Translation als auch Rotation des Filters (40) relativ zum Behälter (20) zu bewirken.

8. Behälter- und Filteranordnung nach einem vorhergehenden Anspruch, die einen Kraftstofftank (10) umfasst.

9. Verfahren zum Einbau einer Behälter- und Filteranordnung im Kraftstofftank (10) eines Fahrzeugs, wobei das Verfahren umfasst:
Mechanisches Verbinden, mithilfe des Verbindungsmittels (60), des Behälters (20) und des Filters (40) in einer ersten Position, wo der Behälter (20) und der Filter (40) Ende an Ende entlang der Längsachse der besagten Anordnung fluchten,
Einschieben der Behälter- und Filteranordnung in den Kraftstofftank (10) eines Fahrzeugs,
Bewegen des Filters (40) relativ zum Behälter (20) von der ersten Position in zweite Betriebsposition, wo der Behälter (20) und der Filter (40) nebeneinander entlang einer Querachse der besagten Anordnung fluchten und wo die besagte Bewegung des Filters (40) von der ersten in die zweite Position aus einer Anpassung des Verbindungsmittels (60) und dem Einschieben der besagten Behälter- und Filteranordnung in den Kraftstofftank (10) des Fahrzeugs herrührt und das Rotieren des Filters bewirkt.

10. Verfahren nach Anspruch 9, wobei der Filter (40) zwischen der ersten Position und der zweiten Position bewegt wird, wenn die Behälter- und Filteranordnung den Boden des Kraftstofftanks (10) berührt.

## Revendications

1. Ensemble réservoir-filtre pour le réservoir de carburant (10) d'un véhicule, comprenant :
un réservoir (20) pour contenir du carburant ;
un filtre (40) pour filtrer le carburant à convoyer depuis le réservoir de carburant (10) vers le moteur du véhicule ; et
des moyens de raccordement (60) pour raccorder le réservoir (20) et le filtre (40),
**caractérisé en ce que** les moyens de raccordement (60) sont adaptés à réaliser un raccordement mécanique du réservoir (20) et du filtre (40) tout en permettant un mouvement du filtre (40) par rapport au réservoir (20) entre une première position pour l'insertion de l'ensemble réservoir-filtre à l'intérieur du réservoir de carburant (10), dans lequel lorsque celui-ci est dans ladite première position, le réservoir (20) et le filtre (40) sont alignés bout-à-bout et en ligne l'un avec l'autre le long de l'axe longitudinal dudit ensemble, et une seconde position pour le fonctionnement de l'ensemble réservoir-filtre, dans lequel lorsque celui-ci est dans ladite seconde position, le réservoir (20) et le filtre (40) sont alignés côte à côte le long d'un axe latéral dudit ensemble, et lesdits moyens de raccordement sont adaptés à provoquer une rotation du filtre (40) par rapport au réservoir (20) quand le filtre (40) se déplace de la première position à la seconde position.

2. Ensemble réservoir-filtre selon la revendication 1, dans lequel le réservoir (20) et le filtre (40) sont alignés quand le filtre (40) est dans la première position, de telle façon que le réservoir (20) et le filtre (40) peuvent être insérés, alors qu'ils sont mécaniquement raccordés, à travers une ouverture du réservoir (10).

3. Ensemble réservoir-filtre selon la revendication 1, dans lequel les moyens de raccordement (60) comprennent une charnière.

4. Ensemble réservoir-filtre selon l'une quelconque des revendications précédentes, dans lequel les moyens de raccordement (60) sont adaptés à permettre une translation du filtre (40) par rapport au réservoir (20) quand le filtre (40) se déplace de la première position à la seconde position.

5. Ensemble réservoir-filtre selon la revendication 4, dans lequel les moyens de raccordement (60) comprennent une tige (64) prévue sur l'un des éléments que sont le filtre (40) et le réservoir (20), laquelle est capable de coulisser dans une fente (66) prévue sur l'autre des éléments que sont le filtre (40) et le réservoir (20).

6. Ensemble réservoir-filtre selon la revendication 5, dans lequel la tige (64) est prévue sur le réservoir (20) et la fente (66) est prévue sur une barre de guidage (62) fixée sur le filtre (40).

7. Ensemble réservoir-filtre selon la revendication 5 ou 6, dans lequel la fente (66) est hélicoïdale pour provoquer à la fois une translation et une rotation du filtre (40) par rapport au réservoir (20).

8. Ensemble réservoir-filtre selon l'une quelconque des revendications précédentes, comprenant un réservoir à carburant (10).

9. Procédé d'installation d'un ensemble réservoir-filtre à l'intérieur du réservoir à carburant (10) d'un véhicule, le procédé comprenant les opérations consistant à :
raccorder mécaniquement, en utilisant des moyens de raccordement (60), le réservoir (20) et le filtre (40) dans une première position dans laquelle le réservoir (20) et le filtre (40) sont alignés bout-à-bout le long de l'axe longitudinal dudit ensemble,
insérer l'ensemble réservoir-filtre dans le réservoir à carburant (10) d'un véhicule,
déplacer le filtre (40) par rapport au réservoir (20) depuis la première position à une seconde position fonctionnelle dans laquelle le réservoir (20) et le filtre (40) sont alignés côte à côte le long d'un axe latéral dudit ensemble, et
dans lequel ledit mouvement du filtre (40) de la première position à la seconde position résulte d'une adaptation des moyens de raccordement (60), et l'insertion dudit ensemble réservoir-filtre dans le réservoir à carburant (10) du véhicule amenant le filtre à tourner.

10. Procédé selon la revendication 9, dans lequel le filtre (40) est déplacé entre la première position et la seconde position quand l'ensemble réservoir-filtre vient en contact avec la base du réservoir à carburant (10).
